# EUROPEAN PATENT SPECIFICATION

(11) **EP 3 537 905 B1**
(45) Date of publication and mention of the grant of the patent: **23.07.2025**
(21) Application number: 17808599.9
(22) Date of filing: 14.11.2017
(51) Int. Cl.: A24F 40/65, A24F 40/53, A24F 40/51, A24F 40/60, A24F 40/10

(54) **AN AEROSOL DELIVERY DEVICE WITH INTEGRATED WIRELESS CONNECTIVITY FOR TEMPERATURE MONITORING**
AEROSOLABGABEVORRICHTUNG MIT DRAHTLOSER VERBINDUNG FÜR TEMPERATURÜBERWACHUNG
DISPOSITIF DE DISTRIBUTION D'AÉROSOL AVEC CONNECTIVITE SANS-FIL POUR SURVEILLANCE DE TEMPERATURE

(30) Priority: 14.11.2016 US 201615350869
(43) Date of publication of application: 18.09.2019
(73) Proprietor: RAI Strategic Holdings, Inc., Winston-Salem, NC 27101 (US)
(72) Inventor: SUR, Rajesh, Winston-Salem, NC 27106 (US); SEARS, Stephen B., Siler City, NC 27344 (US); HUNT, Eric T., Pfafftown, NC 27040 (US)
(74) Representative: Hoeger, Stellrecht & Partner Patentanwälte mbB
(86) International application number: PCT/IB2017/057111
(87) International publication number: WO 2018/087738

(56) References cited:
- WO-A1-2015/192084
- WO-A1-2016/143079
- WO-A1-2018/087719
- WO-A2-2013/098398
- CN-A- 104 055 225
- US-A1- 2009 095 287
- US-A1- 2013 340 775

## Description

### TECHNOLOGICAL FIELD

The present disclosure relates to aerosol delivery devices such as smoking articles, and more particularly to aerosol delivery devices that may utilize electrically generated heat for the production of aerosol (e.g., smoking articles commonly referred to as electronic cigarettes). The smoking articles may be configured to heat an aerosol precursor, which may incorporate materials that may be made or derived from, or otherwise incorporate tobacco, the precursor being capable of forming an inhalable substance for human consumption.

### BACKGROUND

WO 2015/192084 A1 discloses an electronic vaporizer including a heating element for heating a fluid to produce a vapor, a power source to provide electrical power to the heating element for heating the fluid, and a power control circuit configured to regulate a supply of electrical power from the power source to the heating element based at least in part on an operating temperature of the heating element and a temperature setting to prevent the operating temperature of the heating element from exceeding the temperature setting. The temperature setting may be input by a user on a remote user interface. The remote user interface may further display the operating temperature of the heating element.

Many devices have been proposed through the years as improvements upon, or alternatives to, smoking products that require combusting tobacco for use. Many of those devices purportedly have been designed to provide the sensations associated with cigarette, cigar, or pipe smoking, but without delivering considerable quantities of incomplete combustion and pyrolysis products that result from the burning of tobacco. To this end, there have been proposed numerous alternative smoking products, flavor generators, and medicinal inhalers that utilize electrical energy to vaporize or heat a volatile material, or attempt to provide the sensations of cigarette, cigar, or pipe smoking without burning tobacco to a significant degree. See, for example, the various alternative smoking articles, aerosol delivery devices and heat generating sources set forth in the background art described in U.S. Pat. No. 8,881,737 to Collett et al., U.S. Pat. App. Pub. No. 2013/0255702 to Griffith Jr. et al., U.S. Pat. App. Pub. No. 2014/0000638 to Sebastian et al., U.S. Pat. App. Pub. No. 2014/0096781 to Sears et al., U.S. Pat. App. Pub. No. 2014/0096782 to Ampolini et al., U.S. Pat. App. Pub. No. 2015/0059780 to Davis et al., and U.S. Pat. App. Ser. No. 15/222,615 to Watson et al., filed July 28, 2016, the various implementations of products and heating configurations described in the background sections of U.S. Pat. Nos. 5,388,594 to Counts et al. and 8,079,371 to Robinson et al.

However, it may be desirable to provide aerosol delivery devices with improved electronics such as may extend usability of the devices.

### BRIEF SUMMARY

The present disclosure relates to aerosol delivery devices, methods of forming such devices, and elements of such devices. According to the invention, there is provided a system as defined in the appended claims.

These and other features, aspects, and advantages of the present disclosure will be apparent from a reading of the following detailed description together with the accompanying drawings, which are briefly described below. The present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as combinable, unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope of the disclosure in any way. Other example implementations, aspects and advantages will become apparent from the following detailed description taken in conjunction with the accompanying drawings which illustrate, by way of example, the principles of some described example implementations.

### BRIEF DESCRIPTION OF THE DRAWING(S)

Having thus described the disclosure in the foregoing general terms, reference will now be made to the accompanying drawings, which are not necessarily drawn to scale, and wherein:
FIG. 1 illustrates a side view of an aerosol delivery device including a cartridge coupled to a control body, according to an example implementation of the present disclosure;
FIG. 2 is a partially cut-away view of the aerosol delivery device according to various example implementations; and
FIG. 3 illustrates a system including an aerosol delivery device in wireless communication with a computing device, according to various example implementations.

### DETAILED DESCRIPTION

The present disclosure will now be described more fully hereinafter with reference to example implementations thereof. These example implementations are described so that this disclosure will be thorough and complete, and will fully convey the scope of the disclosure to those skilled in the art. Indeed, the disclosure may be embodied in many different forms and should not be construed as limited to the implementations set forth herein; rather, these implementations are provided so that this disclosure will satisfy applicable legal requirements. As used in the specification and the appended claims, the singular forms "a," "an," "the" and the like include plural referents unless the context clearly dictates otherwise. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

As described hereinafter, example implementations of the present disclosure relate to aerosol delivery devices. Aerosol delivery devices according to the present disclosure use electrical energy to heat a material (preferably without combusting the material to any significant degree) to form an inhalable substance; and components of such systems have the form of articles most preferably are sufficiently compact to be considered hand-held devices. That is, use of components of preferred aerosol delivery devices does not result in the production of smoke in the sense that aerosol results principally from byproducts of combustion or pyrolysis of tobacco, but rather, use of those preferred systems results in the production of vapors resulting from volatilization or vaporization of certain components incorporated therein. In some example implementations, components of aerosol delivery devices may be characterized as electronic cigarettes, and those electronic cigarettes most preferably incorporate tobacco and/or components derived from tobacco, and hence deliver tobacco derived components in aerosol form.

Aerosol generating pieces of certain preferred aerosol delivery devices may provide many of the sensations (e.g., inhalation and exhalation rituals, types of tastes or flavors, organoleptic effects, physical feel, use rituals, visual cues such as those provided by visible aerosol, and the like) of smoking a cigarette, cigar or pipe that is employed by lighting and burning tobacco (and hence inhaling tobacco smoke), without any substantial degree of combustion of any component thereof. For example, the user of an aerosol generating piece of the present disclosure can hold and use that piece much like a smoker employs a traditional type of smoking article, draw on one end of that piece for inhalation of aerosol produced by that piece, take or draw puffs at selected intervals of time, and the like.

While the systems are generally described herein in terms of implementations associated with aerosol delivery devices such as so-called "e-cigarettes," it should be understood that the mechanisms, components, features, and methods may be embodied in many different forms and associated with a variety of articles. For example, the description provided herein may be employed in conjunction with implementations of traditional smoking articles (e.g., cigarettes, cigars, pipes, etc.), heat-not-burn cigarettes, and related packaging for any of the products disclosed herein. Accordingly, it should be understood that the description of the mechanisms, components, features, and methods disclosed herein are discussed in terms of implementations relating to aerosol delivery devices by way of example only, and may be embodied and used in various other products and methods.

Aerosol delivery devices of the present disclosure also can be characterized as being vapor-producing articles or medicament delivery articles. Thus, such articles or devices can be adapted so as to provide one or more substances (e.g., flavors and/or pharmaceutical active ingredients) in an inhalable form or state. For example, inhalable substances can be substantially in the form of a vapor (i.e., a substance that is in the gas phase at a temperature lower than its critical point). Alternatively, inhalable substances can be in the form of an aerosol (i.e., a suspension of fine solid particles or liquid droplets in a gas). For purposes of simplicity, the term "aerosol" as used herein is meant to include vapors, gases and aerosols of a form or type suitable for human inhalation, whether or not visible, and whether or not of a form that might be considered to be smoke-like.

In use, aerosol delivery devices of the present disclosure may be subjected to many of the physical actions employed by an individual in using a traditional type of smoking article (e.g., a cigarette, cigar or pipe that is employed by lighting and inhaling tobacco). For example, the user of an aerosol delivery device of the present disclosure can hold that article much like a traditional type of smoking article, draw on one end of that article for inhalation of aerosol produced by that article, take puffs at selected intervals of time, etc.

Aerosol delivery devices of the present disclosure generally include a number of components provided within an outer body or shell, which may be referred to as a housing. The overall design of the outer body or shell can vary, and the format or configuration of the outer body that can define the overall size and shape of the aerosol delivery device can vary. Typically, an elongated body resembling the shape of a cigarette or cigar can be a formed from a single, unitary housing or the elongated housing can be formed of two or more separable bodies. For example, an aerosol delivery device can comprise an elongated shell or body that can be substantially tubular in shape and, as such, resemble the shape of a conventional cigarette or cigar. In one example, all of the components of the aerosol delivery device are contained within one housing. Alternatively, an aerosol delivery device can comprise two or more housings that are joined and are separable. For example, an aerosol delivery device can possess at one end a control body comprising a housing containing one or more reusable components (e.g., an accumulator such as a rechargeable battery and/or rechargeable supercapacitor, and various electronics for controlling the operation of that article), and at the other end and removably coupleable thereto, an outer body or shell containing a disposable portion (e.g., a disposable flavor-containing cartridge). More specific formats, configurations and arrangements of components within the single housing type of unit or within a multi-piece separable housing type of unit will be evident in light of the further disclosure provided herein. Additionally, various aerosol delivery device designs and component arrangements can be appreciated upon consideration of the commercially available electronic aerosol delivery devices.

Aerosol delivery devices of the present disclosure most preferably comprise some combination of a power source (i.e., an electrical power source), at least one control component (e.g., means for actuating, controlling, regulating and ceasing power for heat generation, such as by controlling electrical current flow the power source to other components of the article - e.g., a microprocessor, individually or as part of a microcontroller), a heater or heat generation member (e.g., an electrical resistance heating element or other component, which alone or in combination with one or more further elements may be commonly referred to as an "atomizer"), an aerosol precursor composition (e.g., commonly a liquid capable of yielding an aerosol upon application of sufficient heat, such as ingredients commonly referred to as "smoke juice," "e-liquid" and "e-juice"), and a mouthend region or tip for allowing draw upon the aerosol delivery device for aerosol inhalation (e.g., a defined airflow path through the article such that aerosol generated can be withdrawn therefrom upon draw).

Alignment of the components within the aerosol delivery device of the present disclosure can vary. In specific implementations, the aerosol precursor composition can be located near an end of the aerosol delivery device which may be configured to be positioned proximal to the mouth of a user so as to maximize aerosol delivery to the user. Other configurations, however, are not excluded. Generally, the heating element can be positioned sufficiently near the aerosol precursor composition so that heat from the heating element can volatilize the aerosol precursor (as well as one or more flavorants, medicaments, or the like that may likewise be provided for delivery to a user) and form an aerosol for delivery to the user. When the heating element heats the aerosol precursor composition, an aerosol is formed, released, or generated in a physical form suitable for inhalation by a consumer. It should be noted that the foregoing terms are meant to be interchangeable such that reference to release, releasing, releases, or released includes form or generate, forming or generating, forms or generates, and formed or generated. Specifically, an inhalable substance is released in the form of a vapor or aerosol or mixture thereof, wherein such terms are also interchangeably used herein except where otherwise specified.

As noted above, the aerosol delivery device may incorporate a battery or other electrical power source to provide current flow sufficient to provide various functionalities to the aerosol delivery device, such as powering of a heater, powering of control systems, powering of indicators, and the like. The power source can take on various implementations. Preferably, the power source is able to deliver sufficient power to rapidly heat the heating element to provide for aerosol formation and power the aerosol delivery device through use for a desired duration of time. The power source preferably is sized to fit conveniently within the aerosol delivery device so that the aerosol delivery device can be easily handled. Additionally, a preferred power source is of a sufficiently light weight to not detract from a desirable smoking experience.

More specific formats, configurations and arrangements of components within the aerosol delivery devices of the present disclosure will be evident in light of the further disclosure provided hereinafter. Additionally, the selection and arrangement of various aerosol delivery device components can be appreciated upon consideration of the commercially available electronic aerosol delivery devices. Further, the arrangement of the components within the aerosol delivery device can also be appreciated upon consideration of the commercially-available electronic aerosol delivery devices. Examples of commercially available products, for which the components thereof, methods of operation thereof, materials included therein, and/or other attributes thereof may be included in the devices of the present disclosure have been marketed as ACCORD^{®} by Philip Morris Incorporated; ALPHA^{™}, JOYE 510^{™} and M4^{™} by InnoVapor LLC; CIRRUS^{™} and FLING^{™} by White Cloud Cigarettes; BLU^{™} by Lorillard Technologies, Inc.; COHITA^{™}, COLIBRI^{™}, ELITE CLASSIC^{™}, MAGNUM^{™}, PHANTOM and SENSE^{™} by Epuffer^{®} International Inc.; DUOPRO^{™}, STORM^{™} and VAPORKING^{®} by Electronic Cigarettes, Inc.; EGAR^{™} by Egar Australia; eGo-C^{™} and eGo-T^{™} by Joyetech; ELUSION^{™} by Elusion UK Ltd; EONSMOKE^{®} by Eonsmoke LLC; FIN^{™} by FIN Branding Group, LLC; SMOKE^{®} by Green Smoke Inc. USA; GREENARETTE^{™} by Greenarette LLC; HALLIGAN^{™}, HENDU^{™}, JET^{™}, MAXXQ^{™}, PINK^{™} and PITBULL^{™} by Smoke Stik^{®}; HEATBAR^{™} by Philip Morris International, Inc.; HYDRO IMPERIAL^{™} and LXE^{™} from Crown7; LOGIC^{™} and THE CUBAN^{™} by LOGIC Technology; LUCI^{®} by Luciano Smokes Inc.; METRO^{®} by Nicotek, LLC; NJOY^{®} and ONEJOY^{™} by Sottera, Inc.; NO. 7^{™} by SS Choice LLC; PREMIUM ELECTRONIC CIGARETTE^{™} by PremiumEstore LLC; RAPP E-MYSTICK^{™} by Ruyan America, Inc.; RED DRAGON^{™} by Red Dragon Products, LLC; RUYAN^{®} by Ruyan Group (Holdings) Ltd.; SF^{®} by Smoker Friendly International, LLC; GREEN SMART SMOKER^{®} by The Smart Smoking Electronic Cigarette Company Ltd.; SMOKE ASSIST^{®} by Coastline Products LLC; SMOKING EVERYWHERE^{®} by Smoking Everywhere, Inc.; V2CIGS^{™} by VMR Products LLC; VAPOR NINE^{™} by VaporNine LLC; VAPOR4LIFE^{®} by Vapor 4 Life, Inc.; VEPPO^{™} by E-CigaretteDirect, LLC; AVIGO, VUSE, VUSE CONNECT, VUSE FOB, VUSE HYBRID, ALTO, ALTO+, MODO, CIRO, FOX + FOG, AND SOLO+ by R. J. Reynolds Vapor Company; MISTIC MENTHOL by Mistic Ecigs; and VYPE by CN Creative Ltd. Yet other electrically powered aerosol delivery devices, and in particular those devices that have been characterized as so-called electronic cigarettes, have been marketed under the tradenames COOLER VISIONS^{™}; DIRECT E-CIG^{™}; DRAGONFLY^{™}; EMIST^{™}; EVERSMOKE^{™}; GAMUCCI^{®}; HYBRID FLAME^{™}; KNIGHT STICKS^{™}; ROYAL BLUES^{™}; SMOKETIP^{®}; SOUTH BEACH SMOKE^{™}.

Additional manufacturers, designers, and/or assignees of components and related technologies that may be employed in the aerosol delivery device of the present disclosure include Shenzhen Jieshibo Technology of Shenzhen, China; Shenzhen First Union Technology of Shenzhen City, China; Safe Cig of Los Angeles, CA; Janty Asia Company of the Philippines; Joyetech Changzhou Electronics of Shenzhen, China; SIS Resources; B2B International Holdings of Dover, DE; Evolv LLC of OH; Montrade of Bologna, Italy; Shenzhen Bauway Technology of Shenzhen, China; Global Vapor Trademarks Inc. of Pompano Beach, FL; Vapor Corp. of Fort Lauderdale, FL; Nemtra GMBH of Raschau-Markersbach, Germany, Perrigo L. Co. of Allegan, MI; Needs Co., Ltd.; Smokefree Innotec of Las Vegas, NV; McNeil AB of Helsingborg, Sweden; Chong Corp; Alexza Pharmaceuticals of Mountain View, CA; BLEC, LLC of Charlotte, NC; Gaitrend Sarl of Rohrbach-lés-Bitche, France; FeelLife Bioscience International of Shenzhen, China; Vishay Electronic BMGH of Selb, Germany; Shenzhen Smaco Technology Ltd. of Shenzhen, China; Vapor Systems International of Boca Raton, FL; Exonoid Medical Devices of Israel; Shenzhen Nowotech Electronic of Shenzhen, China; Minilogic Device Corporation of Hong Kong, China; Shenzhen Kontle Electronics of Shenzhen, China, and Fuma International, LLC of Medina, OH, 21st Century Smoke of Beloit, WI, and Kimree Holdings (HK) Co. Limited of Hong Kong, China.

In various examples, an aerosol delivery device can comprise a reservoir configured to retain the aerosol precursor composition. The reservoir particularly can be formed of a porous material (e.g., a fibrous material) and thus may be referred to as a porous substrate (e.g., a fibrous substrate).

A fibrous substrate useful as a reservoir in an aerosol delivery device can be a woven or nonwoven material formed of a plurality of fibers or filaments and can be formed of one or both of natural fibers and synthetic fibers. For example, a fibrous substrate may comprise a fiberglass material. In particular examples, a cellulose acetate material can be used. In other example implementations, a carbon material can be used. A reservoir may be substantially in the form of a container and may include a fibrous material included therein.

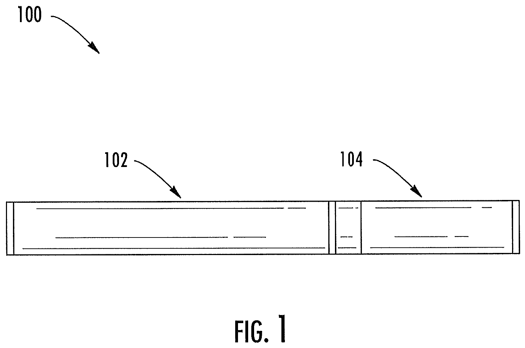

FIG. 1 illustrates a side view of an aerosol delivery device **100** including a control body **102** and a cartridge **104,** according to various example implementations of the present disclosure. In particular, FIG. 1 illustrates the control body and the cartridge coupled to one another. The control body and the cartridge may be detachably aligned in a functioning relationship. Various mechanisms may connect the cartridge to the control body to result in a threaded engagement, a press-fit engagement, an interference fit, a magnetic engagement or the like. The aerosol delivery device may be substantially rod-like, substantially tubular shaped, or substantially cylindrically shaped in some example implementations when the cartridge and the control body are in an assembled configuration. The aerosol delivery device may also be substantially rectangular or rhomboidal in cross-section, which may lend itself to greater compatibility with a substantially flat or thin-film power source, such as a power source including a flat battery. The cartridge and control body may include separate, respective housings or outer bodies, which may be formed of any of a number of different materials. The housing may be formed of any suitable, structurally-sound material. In some examples, the housing may be formed of a metal or alloy, such as stainless steel, aluminum or the like. Other suitable materials include various plastics (e.g., polycarbonate), metal-plating over plastic, ceramics and the like.

In some example implementations, one or both of the control body **102** or the cartridge **104** of the aerosol delivery device **100** may be referred to as being disposable or as being reusable. For example, the control body may have a replaceable battery or a rechargeable battery and thus may be combined with any type of recharging technology, including connection to a typical wall outlet, connection to a car charger (i.e., a cigarette lighter receptacle), connection to a computer, such as through a universal serial bus (USB) cable or connector (e.g., USB 2.0, 3.0, 3.1, USB Type-C), connection to a photovoltaic cell (sometimes referred to as a solar cell) or solar panel of solar cells which may also include GaAs photovoltaic cells with 28% efficiency, or connection to a RF-to-DC converter. Further, in some example implementations, the cartridge may comprise a single-use cartridge, as disclosed in U.S. Pat. No. 8,910,639 to Chang et al.

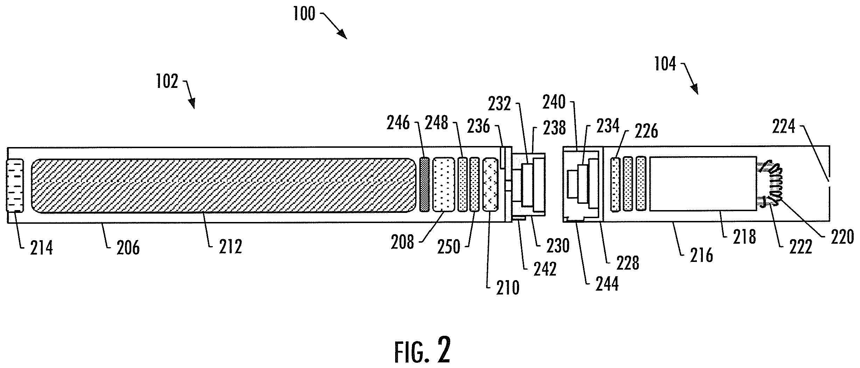

FIG. 2 more particularly illustrates the aerosol delivery device **100,** in accordance with some example implementations. As seen in the cut-away view illustrated therein, again, the aerosol delivery device can comprise a control body **102** and a cartridge **104** each of which include a number of respective components. The components illustrated in FIG. 2 are representative of the components that may be present in a control body and cartridge and are not intended to limit the scope of components that are encompassed by the present disclosure. As shown, for example, the control body can be formed of a control body shell **206** that can include a control component **208** (e.g., a microprocessor, individually or as part of a microcontroller), a flow sensor **210,** a power source **212** and one or more light-emitting diodes (LEDs) **214,** and such components can be variably aligned. The power source may include, for example, a battery (single-use or rechargeable), lithium-ion battery (LiB), solid-state battery (SSB), rechargeable thin-film SSB, rechargeable supercapacitor or the like, or some combination thereof. Some examples of a suitable power source are provided in U.S. Pat. App. Ser. No. 14/918,926 to Sur et al., filed October 21, 2015. The LED may be one example of a suitable visual indicator with which the aerosol delivery device may be equipped. Other indicators such as audio indicators (e.g., speakers), haptic indicators (e.g., vibration motors) or the like can be included in addition to or as an alternative to visual indicators such as the LED, quantum dot enabled LEDs.

The cartridge **104** can be formed of a cartridge shell **216** enclosing a reservoir **218** configured to retain the aerosol precursor composition, and including a heater **222** (sometimes referred to as a heating element). In various configurations, this structure may be referred to as a tank; and accordingly, the terms "cartridge," "tank" and the like may be used interchangeably to refer to a shell or other housing enclosing a reservoir for aerosol precursor composition, and including a heater.

As shown, in some examples, the reservoir **218** may be in fluid communication with a liquid transport element **220** adapted to wick or otherwise transport an aerosol precursor composition stored in the reservoir housing to the heater **222.** In some examples, a valve may be positioned between the reservoir and heater, and configured to control an amount of aerosol precursor composition passed or delivered from the reservoir to the heater.

Various examples of materials configured to produce heat when electrical current is applied therethrough may be employed to form the heater **222.** The heater in these examples may be a resistive heating element such as a wire coil, micro heater, carbon-based heater or the like. Example materials from which the heating element may be formed include Kanthal (FeCrAl), Nichrome, stainless steel, Molybdenum disilicide (MoSi₂), molybdenum silicide (MoSi), Molybdenum disilicide doped with Aluminum (Mo(Si,Al)₂), graphite and graphite-based materials (e.g., carbon-based foams and yarns) and ceramics (e.g., positive or negative temperature coefficient ceramics). Examples of suitable carbon-based heaters are disclosed in U.S. Pat. App. Ser. No. 15/133,916 to Sur, filed April 20, 2016. Example implementations of heaters or heating members useful in aerosol delivery devices according to the present disclosure are further described below, and can be incorporated into devices such as illustrated in FIG. 2 as described herein.

An opening **224** may be present in the cartridge shell **216** (e.g., at the mouthend) to allow for egress of formed aerosol from the cartridge **104.**

The cartridge **104** also may include one or more electronic components **226,** which may include an integrated circuit, a memory component (e.g., EEPROM, flash memory), a sensor, or the like. For example, the cartridge may include an analog or digital temperature sensor configured to measure a temperature of the heater **222,** or measure a property of the temperature sensor from which the temperature of the heater is determinable. Examples of suitable temperature sensors are thermistors, thermocouples, resistance temperature detectors (RTDs), silicon bandgap temperature sensors and the like. More particular examples are described in U.S. Pat. App. Ser. No. 15/349,619 to Davis et al., filed November 11, 2016. The electronic components may be adapted to communicate with the control component **208** and/or with an external device by wired or wireless means. The electronic components may be positioned anywhere within the cartridge or a base **228** thereof.

Although the control component **208** and the flow sensor **210** are illustrated separately, it is understood that various electronic components including the control component and the flow sensor may be combined on an electronic printed circuit board (PCB) that supports and electrically connects the electronic components. Further, the PCB may be positioned horizontally relative the illustration of FIG. 1 in that the PCB can be lengthwise parallel to the central axis of the control body. In some examples, the air flow sensor may comprise its own PCB or other base element to which it can be attached. In some examples, a flexible PCB may be utilized. A flexible PCB may be configured into a variety of shapes, include substantially tubular shapes. In some examples, a flexible PCB may be combined with, layered onto, or form part or all of a heater substrate.

The control body **102** and the cartridge **104** may include components adapted to facilitate a fluid engagement therebetween. As illustrated in FIG. 2, the control body can include a coupler **230** having a cavity **232** therein. The base **228** of the cartridge can be adapted to engage the coupler and can include a projection **234** adapted to fit within the cavity. Such engagement can facilitate a stable connection between the control body and the cartridge as well as establish an electrical connection between the power source **212** and control component **208** in the control body and the heater **222** in the cartridge. Further, the control body shell **206** can include an air intake **236,** which may be a notch in the shell where it connects to the coupler that allows for passage of ambient air around the coupler and into the shell where it then passes through the cavity **232** of the coupler and into the cartridge through the projection **234.**

A coupler and a base useful according to the present disclosure are described in U.S. Pat. App. Pub. No. 2014/0261495 to Novak et al., which is incorporated herein by reference. For example, the coupler **230** as seen in FIG. 2 may define an outer periphery **238** configured to mate with an inner periphery **240** of the base **228.** In one example the inner periphery of the base may define a radius that is substantially equal to, or slightly greater than, a radius of the outer periphery of the coupler. Further, the coupler may define one or more protrusions **242** at the outer periphery configured to engage one or more recesses **244** defined at the inner periphery of the base. However, various other examples of structures, shapes and components may be employed to couple the base to the coupler. In some examples the connection between the base of the cartridge **104** and the coupler of the control body **102** may be substantially permanent, whereas in other examples the connection therebetween may be releasable such that, for example, the control body may be reused with one or more additional cartridges that may be disposable and/or refillable.

The aerosol delivery device **100** may be substantially rod-like or substantially tubular shaped or substantially cylindrically shaped in some examples. In other examples, further shapes and dimensions are encompassed - e.g., a rectangular or triangular cross-section, multifaceted shapes, or the like.

The reservoir **218** illustrated in FIG. 2 can be a container or can be a fibrous reservoir, as presently described. For example, the reservoir can comprise one or more layers of nonwoven fibers substantially formed into the shape of a tube encircling the interior of the cartridge shell **216,** in this example. An aerosol precursor composition can be retained in the reservoir. Liquid components, for example, can be sorptively retained by the reservoir. The reservoir can be in fluid connection with the liquid transport element **220.** The liquid transport element can transport the aerosol precursor composition stored in the reservoir via capillary action to the heater **222** that is in the form of a metal wire coil in this example. As such, the heater is in a heating arrangement with the liquid transport element. Example implementations of reservoirs and transport elements useful in aerosol delivery devices according to the present disclosure are further described below, and such reservoirs and/or transport elements can be incorporated into devices such as illustrated in FIG. 2 as described herein. In particular, specific combinations of heating members and transport elements as further described below may be incorporated into devices such as illustrated in FIG. 2 as described herein.

In use, when a user draws on the aerosol delivery device **100,** airflow is detected by the flow sensor **210,** and the heater **222** is activated to vaporize components of the aerosol precursor composition. Drawing upon the mouthend of the aerosol delivery device causes ambient air to enter the air intake **236** and pass through the cavity **232** in the coupler **230** and the central opening in the projection **234** of the base **228.** In the cartridge **104,** the drawn air combines with the formed vapor to form an aerosol. The aerosol is whisked, aspirated or otherwise drawn away from the heater and out the opening **224** in the mouthend of the aerosol delivery device.

In some examples, the aerosol delivery device **100** may include a number of additional software-controlled functions. For example, the aerosol delivery device may include a power-source protection circuit configured to detect power-source input, loads on the power-source terminals, and charging input. The power-source protection circuit may include short-circuit protection, under-voltage lock out and/or over-voltage charge protection, battery temperature compensation, battery electrolyte compensation. The aerosol delivery device may also include components for ambient temperature measurement, and its control component **208** may be configured to control at least one functional element to inhibit power-source charging - particularly of any battery - if the ambient temperature is below a certain temperature (e.g., 0 °C) or above a certain temperature (e.g., 45 °C) prior to start of charging or during charging.

Power delivery from the power source **212** may vary over the course of each puff on the device **100** according to a power control mechanism. The device may include a "long puff" safety timer such that in the event that a user or component failure (e.g., flow sensor **210)** causes the device to attempt to puff continuously, the control component **208** may control at least one functional element to terminate the puff automatically after some period of time (e.g., four seconds). Further, the time between puffs on the device may be restricted to less than a period of time (e.g., 100 seconds). A watchdog safety timer may automatically reset the aerosol delivery device if its control component or software running on it becomes unstable and does not service the timer within an appropriate time interval (e.g., eight seconds). Further safety protection may be provided in the event of a defective or otherwise failed flow sensor **210,** such as by permanently disabling the aerosol delivery device in order to prevent inadvertent heating. A puffing limit switch may deactivate the device in the event of a pressure sensor fail causing the device to continuously activate without stopping after the four second maximum puff time.

The aerosol delivery device **100** may include a puff tracking algorithm configured for heater lockout once a defined number of puffs has been achieved for an attached cartridge (based on the number of available puffs calculated in light of the e-liquid charge in the cartridge). The aerosol delivery device may include a sleep, standby or low-power mode function whereby power delivery may be automatically cut off after a defined period of non-use. In these modes, a supply current in the quiescent state (Iddq), which may be in the milli- or micro-amp range, to enable the aerosol delivery device power back up. Further safety protection may be provided in that all charge/discharge cycles of the power source **212** may be monitored by the control component **208** over its lifetime. After the power source has attained the equivalent of a predetermined number (e.g., 200) of full discharge and full recharge cycles, it may be declared depleted, and the control component may control at least one functional element to prevent further charging of the power source.

The various components of an aerosol delivery device according to the present disclosure can be chosen from components described in the art and commercially available. Examples of batteries that can be used according to the disclosure are described in U.S. Pat. App. Pub. No. 2010/0028766 to Peckerar et al.

The aerosol delivery device **100** can incorporate the sensor **210** or another sensor or detector for control of supply of electric power to the heater **222** when aerosol generation is desired (e.g., upon draw during use). As such, for example, there is provided a manner or method of turning off power to the heater when the aerosol delivery device is not be drawn upon during use, and for turning on power to actuate or trigger the generation of heat by the heater during draw. Additional representative types of sensing or detection mechanisms, structure and configuration thereof, components thereof, and general methods of operation thereof, are described in U.S. Pat. No. 5,261,424 to Sprinkel, Jr., U.S. Pat. No. 5,372,148 to McCafferty et al., and PCT Pat. App. Pub. No. WO 2010/003480 to Flick.

The aerosol delivery device **100** most preferably incorporates the control component **208** or another control mechanism for controlling the amount of electric power to the heater **222** during draw. Representative types of electronic components, structure and configuration thereof, features thereof, and general methods of operation thereof, are described in U.S. Pat. No. 4,735,217 to Gerth et al., U.S. Pat. No. 4,947,874 to Brooks et al., U.S. Pat. No. 5,372,148 to McCafferty et al., U.S. Pat. No. 6,040,560 to Fleischhauer et al., U.S. Pat. No. 7,040,314 to Nguyen et al., U.S. Pat. No. 8,205,622 to Pan, U.S. Pat. App. Pub. No. 2009/0230117 to Fernando et al., U.S. Pat. App. Pub. No. 2014/0060554 to Collet et al., U.S. Pat. App. Pub. No. 2014/0270727 to Ampolini et al., and U.S. Pat. App. Pub. No. 2015/0257445 to Henry et al.

Representative types of substrates, reservoirs or other components for supporting the aerosol precursor are described in U.S. Pat. No. 8,528,569 to Newton, U.S. Pat. App. Pub. No. 2014/0261487 to Chapman et al., U.S. Pat. App. Pub. No. 2015/0059780 to Davis et al., and U.S. Pat. App. Pub. No. 2015/0216232 to Bless et al.. Additionally, various wicking materials, and the configuration and operation of those wicking materials within certain types of electronic cigarettes, are set forth in U.S. Pat. App. Pub. No. 2014/0209105 to Sears et al.

The aerosol precursor composition, also referred to as a vapor precursor composition, may comprise a variety of components including, by way of example, a polyhydric alcohol (e.g., glycerin, propylene glycol or a mixture thereof), nicotine, tobacco, tobacco extract and/or flavorants. Representative types of aerosol precursor components and formulations also are set forth and characterized in U.S. Pat. No. 7,217,320 to Robinson et al. and U.S. Pat. Pub. Nos. 2013/0008457 to Zheng et al.; 2013/0213417 to Chong et al.; 2014/0060554 to Collett et al.; 2015/0020823 to Lipowicz et al.; and 2015/0020830 to Koller, as well as WO 2014/182736 to Bowen et al., and U.S. Pat. App. Ser. No. 15/222,615 to Watson et al., filed July 28, 2016. Other aerosol precursors that may be employed include the aerosol precursors that have been incorporated in the VUSE^{®} product by R. J. Reynolds Vapor Company, the BLU^{™} product by Imperial Tobacco Group PLC, the MISTIC MENTHOL product by Mistic Ecigs, and the VYPE product by CN Creative Ltd. Also desirable are the so-called "smoke juices" for electronic cigarettes that have been available from Johnson Creek Enterprises LLC.

Implementations of effervescent materials can be used with the aerosol precursor, and are described, by way of example, in U.S. Pat. App. Pub. No. 2012/0055494 to Hunt et al. Further, the use of effervescent materials is described, for example, in U.S. Pat. No. 4,639,368 to Niazi et al.; U.S. Pat. No. 5,178,878 to Wehling et al.; U.S. Pat. No. 5,223,264 to Wehling et al.; U.S. Pat. No. 6,974,590 to Pather et al.; U.S. Pat. No. 7,381,667 to Bergquist et al.; U.S. Pat. No. 8,424,541 to Crawford et al; and U.S. Pat. No. 8,627,828 to Strickland et al.; as well as US Pat. Pub. Nos. 2010/0018539 to Brinkley et al. and 2010/0170522 to Sun et al.; and PCT WO 97/06786 to Johnson et al. Additional description with respect to implementations of aerosol precursor compositions, including description of tobacco or components derived from tobacco included therein, is provided in U.S. Pat. Appl. Ser. Nos. 15/216,582 and 15/216,590, each filed July 21, 2016 and each to Davis et al.

Additional representative types of components that yield visual cues or indicators may be employed in the aerosol delivery device **100,** such as visual indicators and related components, audio indicators, haptic indicators and the like. Examples of suitable LED components, and the configurations and uses thereof, are described in U.S. Pat. No. 5,154,192 to Sprinkel et al., U.S. Pat. No. 8,499,766 to Newton, U.S. Pat. No. 8,539,959 to Scatterday, and U.S. Pat. App. Pub. No. 2015/0216233 to Sears et al.

Yet other features, controls or components that can be incorporated into aerosol delivery devices of the present disclosure are described in U.S. Pat. No. 5,967,148 to Harris et al., U.S. Pat. No. 5,934,289 to Watkins et al., U.S. Pat. No. 5,954,979 to Counts et al., U.S. Pat. No. 6,040,560 to Fleischhauer et al., U.S. Pat. No. 8,365,742 to Hon, U.S. Pat. No. 8,402,976 to Fernando et al., U.S. Pat. App. Pub. No. 2005/0016550 to Katase, U.S. Pat. App. Pub. No. 2010/0163063 to Fernando et al., U.S. Pat. App. Pub. No. 2013/0192623 to Tucker et al., U.S. Pat. App. Pub. No. 2013/0298905 to Leven et al., U.S. Pat. App. Pub. No. 2013/0180553 to Kim et al., U.S. Pat. App. Pub. No. 2014/0000638 to Sebastian et al., U.S. Pat. App. Pub. No. 2014/0261495 to Novak et al., and U.S. Pat. App. Pub. No. 2014/0261408 to DePiano et al.

As indicated above, the control component **208** includes a number of electronic components, and in some examples may be formed of a PCB. The electronic components may include a microprocessor or processor core, and a memory. In some examples, the control component may include a microcontroller with integrated processor core and memory, and may further include one or more integrated input/output peripherals. In some examples, the control component may be coupled to a communication interface **246** to enable wireless communication with one or more networks, computing devices or other appropriately-enabled devices. Examples of suitable communication interfaces are disclosed in U.S. Pat. App. Ser. No. 14/638,562 to Marion et al., filed March 4, 2015. In some examples, the control component includes a microcontroller unit (MCU) with a built-in communication interface. One example of a suitable MCU with built-in communication interface is the CC3200 single chip wireless MCU from Texas Instruments. Examples of suitable manners according to which the aerosol delivery device may be configured to wirelessly communicate are disclosed in U.S. Pat. App. Pub. No. 2016/0007651 to Ampolini et al., and U.S. Pat. App. Pub. No. 2016/0219933 to Henry, Jr. et al.

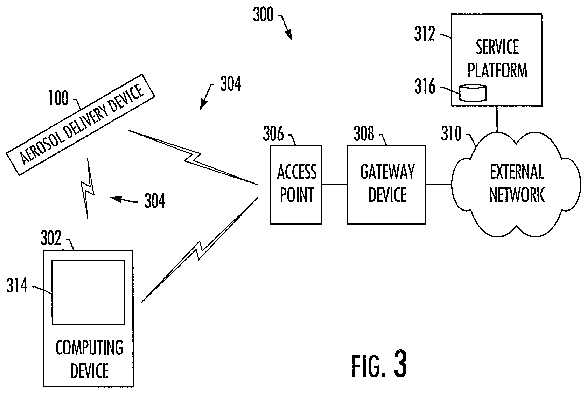

FIG. 3 illustrates a system **300** including an aerosol delivery device **100** in wireless communication with a computing device **302** external to the aerosol delivery device **100** (an external computing device), according to various example implementations. This computing device may also be embodied as a number of different devices, such as any of a number of different mobile computers. More particular examples of suitable mobile computers include portable computers (e.g., laptops, notebooks, tablet computers), mobile phones (e.g., cell phones, smartphones), wearable computers (e.g., smartwatches) and the like. In other examples, the computing device may be embodied as other than a mobile computer, such as in the manner of a desktop computer, server computer or the like.

In some examples, the communication interface **246** of the aerosol delivery device **100** is configured to enable establishment of or connection to a wireless personal area network (WPAN) **304** that includes the computing device **302.** Examples of suitable WPAN technologies include those based on or specified by IEEE 802.15 standards, including Bluetooth, Bluetooth low energy (Bluetooth LE), ZigBee, infrared (e.g., IrDA), radio-frequency identification (RFID), Wireless USB and the like. Other examples of suitable WPAN technologies include Wi-Fi Direct, as well as certain other technologies based on or specified by IEEE 802.11 standards and that support direct device-to-device communication.

In some examples, the communication interface **246** of the aerosol delivery device **100** is configured to enable connection to a wireless local area network (WLAN) **304.** Examples of suitable WLAN technologies include those based on or specified by IEEE 802.11 standards and marketed as Wi-Fi. The WLAN includes appropriate networking hardware, some of which may be integral and others of which may be separate and interconnected. As shown, for example, the WLAN includes a wireless access point **306** configured to permit wireless devices including the aerosol delivery device **100** and computing device **302** to connect to the WLAN. As also shown, for example, the WLAN may include a gateway device **308** such as a residential gateway configured to connect the WLAN to an external computer network **310** such as a wide area network (WAN) like the Internet. In some examples, the wireless access point or gateway device may include an integrated router to which other systems or devices may be connected. The WLAN may also include other integral or separate and connected networking hardware, such as a network switch, hub, digital subscriber line (DSL) modem, cable modem or the like.

In some examples, the system **300** further includes a service platform **312,** which may be embodied as a computer system accessible by the WLAN **304** or external network **310** (as shown). The service platform may include one or more servers, such as may be provided by one or more blade servers, a cloud computing infrastructure or the like. In some examples, the service platform is embodied as a distributed computing apparatus including multiple computing devices, such as may be used to provide a cloud computing infrastructure. And in these examples, the computing devices that form the service platform may be in communication with each other via a network such as the external network.

In some examples, the service platform **312** is accessible by the aerosol delivery device **100** over the WLAN **304** and external network **310,** and configured to provide one or more services for the aerosol delivery device and perhaps other aerosol delivery devices. For example, the service platform may be operated by a manufacturer of an aerosol delivery device, a vendor of an aerosol delivery device or another entity with interest in the manufacture, distribution or maintenance of an aerosol delivery device. The service platform may enable a user to access and use various features, such as features for management of an aerosol delivery device, such as those described below.

Similar to the aerosol delivery device **100,** in some examples, the service platform **312** is accessible by the computing device **302** over the WLAN **304** and external network **310,** although the WLAN or external network may be different between the aerosol delivery device and computing device. The computing device may include or otherwise provide an installed application or other interface through which the service platform **114** may be accessible. This application or other interface may be or may be provided by a thin client and/or other client application, such as a web browser application through which a web page (e.g., service portal) provided by the service platform may be accessible. As another example, the application or other interface may be or may be provided by a dedicated application, such as a mobile app installed on a computing device embodied as a mobile computing device.

In at least some examples in which the control component **208** includes a MCU with built-in communication interface, the MCU is coupled to the temperature sensor (electronic component **226)** and the built-in communication interface is configured to enable connection to the WLAN **304,** and communication with the service platform **312** over at least one network including the WLAN (e.g., the WLAN and the external network **310).** In these examples, the MCU is configured communicate with the service platform to enable the computing device **302** in communication with the service platform to remotely receive and provide a user-perceptible feedback that indicates the temperature of the heater **222** measured or determined from the property measured by the temperature sensor.

In some examples, the user-perceptible feedback (e.g., visual, audible, haptic feedback) is provided by an indicator **314** (e.g., visual indicator, audio indicator, haptic indicator) of the computing device. The feedback may include, for example, a visual, audible and/or haptic notification of the temperature of the heater **222,** or that the temperature of the heater is above, at or below a threshold temperature that defines an upper acceptable limit. In instances in which the amount is above the threshold temperature, the indicator may provide the user-perceptible feedback such as an alarm, buzzer, vibration or visual indicator (e.g., LED) to warn the user.

In some examples, the MCU (control component **208)** is configured to communicate with the service platform to not only enable remote user-perceptible feedback, but to further enable the computing device **302** to remotely control at least one functional element of the aerosol delivery device **100.** For example, control of the functional element(s) includes control of the functional element(s) to alter a power state or a locked state of the aerosol delivery device, either based on or independent of the temperature of the heater **222.** This may include, for example, turning the aerosol delivery device on or off, or unlocking (enabling) or locking (disabling) operation of the aerosol delivery device. A user of the computing device may therefore control the computing device, or the computing device may operate automatically, to remotely turn the aerosol delivery device off or lock its operation in instances in which the temperature of the heater exceeds the threshold temperature.

In some examples, the service platform **312** includes a database **316** (an organized collection of data). In these examples, the MCU (control component **208)** may be configured to communicate with the service platform to further enable storage of the temperature in the database and analysis of the temperature therefrom. For example, the temperature may be processed by use of Java, structured query language (SQL) or the like for proper data structuring. A tool may be run to perform a statistical analysis on the temperature data, such as for analysis of power supplied to the heater **222,** characterization of wicking material in the aerosol delivery device **100,** or the like.

It should be understood that although the aerosol delivery device **100** described above includes a temperature sensor (electronic component **226)** to enable temperature monitoring at the computing device **302,** other sensors may be included to enable other, similar functionality. Briefly returning to FIG. 2, in some examples, the control body **102** further includes a motion sensor **248** configured to detect motion of the aerosol delivery device **100,** or more particularly the control body. Examples of suitable motion sensors include single or combinations of tilt sensors, single or multi-axis accelerometers, gyroscopes and the like, any one or more of which may be constructed using microelectromechanical systems-based (MEMS) techniques. In at least some of these examples, the MCU (control component **208)** is also coupled to the motion sensor and configured to communicate with the service platform **312** to enable the computing device to remotely receive and provide a user-perceptible feedback that indicates the motion detected by the motion sensor. This may be useful for a number of different purposes, such as to provide an alarm, buzzer, vibration or visual indicator (e.g., LED) to warn the user of the computing device that the aerosol delivery device has been moved from its desired location.

It should also be understood that although the certain functionality may be enabled at the computing device **302,** similar functionality may be additionally or alternatively enabled at the aerosol delivery device **100** itself. In some examples, the MCU (control component **208)** is further configured to control an indicator **250** (e.g., visual indicator, audio indicator, haptic indicator) to provide a user-perceptible feedback (e.g., visual, audible, haptic feedback) that indicates the temperature of the heater **222.** The indicator and feedback may be similar to that described above for the indicator **314** of the computing device.

In addition to or in lieu of control of the indicator **250,** in some examples, the MCU (control component **208)** is further configured to control at least one functional element of the aerosol delivery device to alter a power state or a locked state of the aerosol delivery device based on the temperature of the heater **222.** Similar to before, this may include, for example, turning the aerosol delivery device on or off, or unlocking (enabling) or locking (disabling) operation of the aerosol delivery device, such as in instances in which the temperature of the heater exceeds the threshold temperature.

Even further, in at least some examples in which the control body **102** includes the motion sensor **248,** the MCU (control component **208)** is also coupled to the motion sensor and configured to control the indicator **250** or another indicator to provide a user-perceptible feedback that indicates the motion detected by the motion sensor. Again, this may be useful for a number of different purposes, such as to provide an alarm, buzzer, vibration or visual indicator (e.g., LED) to warn a user within sufficient vicinity of the aerosol delivery device that the aerosol delivery device has been moved from its desired location.

Although not separately shown, in addition to or in lieu of the control body **102,** the cartridge **104** may include a temperature sensor, and perhaps also a motion sensor and/or an indicator. The temperature sensor, motion sensor and indicator in the cartridge may be similar to those that may be found in the control body as described herein.

The foregoing description of use of the article(s) can be applied to the various example implementations described herein through minor modifications, which can be apparent to the person of skill in the art in light of the further disclosure provided herein. The above description of use, however, is not intended to limit the use of the article but is provided to comply with all necessary requirements of disclosure of the present disclosure. Any of the elements shown in the article(s) illustrated in FIGS. 1-3 or as otherwise described above may be included in an aerosol delivery device according to the present disclosure.

Many modifications and other implementations of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific implementations disclosed, and that modifications and other implementations are intended to be included within the scope of the appended claims. Moreover, although the foregoing descriptions and the associated drawings describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system (300) including:
a service platform (312);
a computing device (302) in communication with the service platform (312); and
an aerosol delivery device comprising:
at least one housing enclosing a reservoir (218) configured to retain an aerosol precursor composition;
a heating element (222) controllable to activate and vaporize components of the aerosol precursor composition;
a temperature sensor configured to measure a temperature of the heating element (222), or measure a property of the temperature sensor from which the temperature of the heating element (222) is determinable; and
a microcontroller unit (MCU) (208) coupled to the temperature sensor and including a built-in communication interface (246) configured to enable connection to a wireless local area network (WLAN) (304), and communication with the service platform (312) that includes a database over at least one network including the WLAN (304), the MCU (208) being configured to communicate with the service platform (312) to enable storage of the temperature in the database and analysis of the temperature therefrom, and to enable the computing device (302) in communication with the service platform (312) and remote from the MCU (208) to remotely receive and provide a user-perceptible feedback that indicates the temperature of the heating element (222) is above, at or below a threshold temperature that defines an upper acceptable limit, wherein the MCU (208) is responsive to signals received from, and configured to be remotely controlled by, the computing device (302) to control at least one functional element of the aerosol delivery device, the control of the at least one functional element including altering a locked state of the aerosol delivery device based on the temperature of the heating element (222).

2. The system of claim 1, wherein the aerosol delivery device further comprises a motion sensor (248) configured to detect motion of the aerosol delivery device, and
wherein the MCU (208) is also coupled to the motion sensor (248) and configured to communicate with the service platform (312) to enable the computing device (302) to remotely receive and provide a user-perceptible feedback that indicates the motion detected by the motion sensor (248).

3. The system of claim 1 or 2, wherein the MCU (208) is further configured to control an indicator (250) to provide a user-perceptible feedback that indicates the temperature of the heating element (222).

4. The system of any one of claims 1 to 3, wherein the aerosol delivery device further comprises a motion sensor (248) configured to detect motion of the aerosol delivery device, and
wherein the MCU (208) is also coupled to the motion sensor (248) and configured to control an indicator (250) to provide a user-perceptible feedback that indicates the motion detected by the motion sensor (248).

5. The system of any one of claims 1 to 4, wherein the aerosol precursor composition comprises glycerin and nicotine.

6. A system (300) including:
a service platform (312);
a computing device (302) in communication with the service platform (312); and
a control body coupled or coupleable with a cartridge (104) to form an aerosol delivery device, the cartridge (104) including a reservoir (218) configured to retain an aerosol precursor composition, a heating element (222) controllable to activate and vaporize components of the aerosol precursor composition, and a temperature sensor configured to measure a temperature of the heating element (222), or measure a property of the temperature sensor from which the temperature of the heating element (222) is determinable, the control body comprising:
a housing; and within the housing,
a microcontroller unit (MCU) (208) coupled to the temperature sensor when the control body is coupled with the cartridge (104), and including a built-in communication interface (246) configured to enable connection to a wireless local area network (WLAN) (304), and communication with the service platform (312) that includes a database over at least one network including the WLAN (304), the MCU (208) being configured to communicate with the service platform (312) to enable the computing device (302) in communication with the service platform (312), and remote from the MCU (208), to enable storage of the temperature in the database and analysis of the temperature therefrom, and to remotely receive and provide a user-perceptible feedback that indicates the temperature of the heating element (222) is above, at or below a threshold temperature that defines an upper acceptable limit, wherein the MCU (208) is responsive to signals received from, and configured to be remotely controlled by, the computing device (302) to control at least one functional element of the aerosol delivery device, the control of the at least one functional element including altering a locked state of the aerosol delivery device based on the temperature of the heating element (222).

7. The system of claim 6, wherein the control body further comprises a motion sensor (248) configured to detect motion of the control body, and
wherein the MCU (208) is also coupled to the motion sensor (248) and configured to communicate with the service platform (312) to enable the computing device (302) to remotely receive and provide a user-perceptible feedback that indicates the motion detected by the motion sensor (248).

8. The system of claim 6 or 7, wherein the MCU (208) is further configured to control an indicator (250) to provide a user-perceptible feedback that indicates the temperature of the heating element (222).

9. The system of any one of claims 6 to 8, wherein the control body further comprises a motion sensor (248) configured to detect motion of the aerosol delivery device, and
wherein the MCU (208) is also coupled to the motion sensor (248) and configured to control an indicator (250) to provide a user-perceptible feedback that indicates the motion detected by the motion sensor (248).

## Patentansprüche

1. Ein System (300), umfassend:
eine Service-Plattform (312);
eine Recheneinrichtung (302) in Kommunikation mit der Service-Plattform (312); und
eine Aerosolabgabevorrichtung, umfassend:
mindestens ein Gehäuse, welches ein Reservoir (218) umschließt, das dazu ausgebildet ist, eine Aerosol-Precursor-Zusammensetzung zu halten;
ein Heizelement (222), welches kontrollierbar ist, um Komponenten der Aerosol-Precursor-Zusammensetzung zu aktivieren und zu verdampfen;
einen Temperatursensor, welcher ausgebildet ist, um eine Temperatur des Heizelements (222) zu messen, oder um eine Eigenschaft des Temperatursensors zu messen, anhand derer die Temperatur des Heizelements (222) bestimmbar ist; und
eine Microcontroller-Einheit (MCU) (208), welche mit dem Temperatursensor gekoppelt ist und eine eingebaute Kommunikationsschnittstelle (246) umfasst, welche dazu ausgebildet ist, eine Verbindung mit einem drahtlosen lokalen Netzwerk (WLAN) (304) und Kommunikation mit der Service-Plattform (312), welche eine Datenbank umfasst, über mindestens ein Netzwerk, umfassend das WLAN (304), zu ermöglichen, wobei die MCU (208) dazu ausgebildet ist, mit der Service-Plattform (312) zu kommunizieren, um eine Speicherung der Temperatur in der Datenbank und daraus eine Analyse der Temperatur zu ermöglichen, und um der Recheneinrichtung (302) in Kommunikation mit der Service-Plattform (312) und entfernt von der MCU (208) zu ermöglichen, eine für den Nutzer wahrnehmbare Rückmeldung aus der Ferne zu empfangen und bereitzustellen, welche angibt, dass die Temperatur des Heizelements (222) oberhalb, bei oder unterhalb einer Schwellentemperatur liegt, die eine obere zulässige Grenze definiert, wobei die MCU (208) auf Signale anspricht, welche von der Recheneinrichtung (302) empfangen werden, und dazu ausgebildet ist, von derselben aus der Ferne kontrolliert zu werden, um mindestens ein Funktionselement der Aerosolabgabevorrichtung zu kontrollieren, wobei die Kontrolle des mindestens einen Funktionselements umfasst: Ändern eines verriegelten Zustands der Aerosolabgabevorrichtung auf Basis der Temperatur des Heizelements (222).

2. Das System nach Anspruch 1, wobei die Aerosolabgabevorrichtung ferner umfasst:
einen Bewegungssensor (248), welcher dazu ausgebildet ist, eine Bewegung der Aerosolabgabevorrichtung zu detektieren, und
wobei die MCU (208) auch mit dem Bewegungssensor (248) gekoppelt ist und dazu ausgebildet ist, mit der Service-Plattform (312) zu kommunizieren, um der Recheneinrichtung (302) zu ermöglichen, eine für den Nutzer wahrnehmbare Rückmeldung aus der Ferne zu empfangen und bereitzustellen, welche die von dem Bewegungssensor (248) detektierte Bewegung angibt.

3. Das System nach Anspruch 1 oder 2, wobei die MCU (208) ferner dazu ausgebildet ist, eine Anzeigeeinrichtung (250) zu kontrollieren, um eine für den Nutzer wahrnehmbare Rückmeldung bereitzustellen, welche die Temperatur des Heizelements (222) angibt.

4. Das System nach einem der Ansprüche 1 bis 3, wobei die Aerosolabgabevorrichtung ferner umfasst:
einen Bewegungssensor (248), welcher dazu ausgebildet ist, eine Bewegung der Aerosolabgabevorrichtung zu detektieren, und
wobei die MCU (208) auch mit dem Bewegungssensor (248) gekoppelt ist und dazu ausgebildet ist, eine Anzeigeeinrichtung (250) zu kontrollieren, um eine für den Nutzer wahrnehmbare Rückmeldung bereitzustellen, welche die mittels des Bewegungssensors (248) detektierte Bewegung angibt.

5. Das System nach einem der Ansprüche 1 bis 4, wobei die Aerosol-Precursor-Zusammensetzung Glycerin und Nicotin umfasst.

6. Ein System (300), umfassend:
eine Service-Plattform (312);
eine Recheneinrichtung (302) in Kommunikation mit der Service-Plattform (312); und
einen Kontrollkörper, welcher mit einer Patrone (104) gekoppelt oder koppelbar ist, um eine Aerosolabgabevorrichtung zu bilden, wobei die Patrone (104) umfasst: ein Reservoir (218), welches dazu ausgebildet ist, eine Aerosol-Precursor-Zusammensetzung zu halten, ein Heizelement (222), welches kontrollierbar ist, um Komponenten der Aerosol-Precursor-Zusammensetzung zu aktivieren und zu verdampfen, und einen Temperatursensor, welcher ausgebildet ist, um eine Temperatur des Heizelements (222) zu messen, oder um eine Eigenschaft des Temperatursensors zu messen, anhand derer die Temperatur des Heizelements (222) bestimmbar ist, wobei der Kontrollkörper umfasst:
ein Gehäuse; und innerhalb des Gehäuses:
eine Microcontroller-Einheit (MCU) (208), welche mit dem Temperatursensor gekoppelt ist, wenn der Kontrollkörper mit der Patrone (104) gekoppelt ist, und welche eine eingebaute Kommunikationsschnittstelle (246) umfasst, die dazu ausgebildet ist, eine Verbindung mit einem drahtlosen lokalen Netzwerk (WLAN) (304) und Kommunikation mit der Service-Plattform (312), welche eine Datenbank umfasst, über mindestens ein Netzwerk, umfassend das WLAN (304), zu ermöglichen, wobei die MCU (208) dazu ausgebildet ist, mit der Service-Plattform (312) zu kommunizieren, um der Recheneinrichtung (302) in Kommunikation mit der Service-Plattform (312) und entfernt von der MCU (208) eine Speicherung der Temperatur in der Datenbank und daraus eine Analyse der Temperatur zu ermöglichen, und um eine für den Nutzer wahrnehmbare Rückmeldung aus der Ferne zu empfangen und bereitzustellen, die angibt, dass die Temperatur des Heizelements (222) oberhalb, bei oder unterhalb einer Schwellentemperatur liegt, welche eine obere zulässige Grenze definiert, wobei die MCU (208) auf Signale anspricht, welche von der Recheneinrichtung (302) empfangen werden, und dazu ausgebildet ist, von derselben aus der Ferne kontrolliert zu werden, um mindestens ein Funktionselement der Aerosolabgabevorrichtung zu kontrollieren, wobei die Kontrolle des mindestens einen Funktionselements umfasst:
Ändern eines verriegelten Zustands der Aerosolabgabevorrichtung auf Basis der Temperatur des Heizelements (222).

7. Das System nach Anspruch 6, wobei der Kontrollkörper ferner umfasst:
einen Bewegungssensor (248), welcher dazu ausgebildet ist, eine Bewegung des Kontrollkörpers zu detektieren, und
wobei die MCU (208) auch mit dem Bewegungssensor (248) gekoppelt ist und dazu ausgebildet ist, mit der Service-Plattform (312) zu kommunizieren, um der Recheneinrichtung (302) zu ermöglichen, eine für den Nutzer wahrnehmbare Rückmeldung aus der Ferne zu empfangen und bereitzustellen, welche die von dem Bewegungssensor (248) detektierte Bewegung angibt.

8. Das System nach Anspruch 6 oder 7, wobei die MCU (208) ferner dazu ausgebildet ist, eine Anzeigeeinrichtung (250) zu kontrollieren, um eine für den Nutzer wahrnehmbare Rückmeldung bereitzustellen, welche die Temperatur des Heizelements (222) angibt.

9. Das System nach einem der Ansprüche 6 bis 8, wobei der Kontrollkörper ferner umfasst:
einen Bewegungssensor (248), welcher dazu ausgebildet ist, eine Bewegung der Aerosolabgabevorrichtung zu detektieren, und
wobei die MCU (208) auch mit dem Bewegungssensor (248) gekoppelt ist und dazu ausgebildet ist, eine Anzeigeeinrichtung (250) zu kontrollieren, um eine für den Nutzer wahrnehmbare Rückmeldung bereitzustellen, welche die mittels des Bewegungssensors (248) detektierte Bewegung angibt.

## Revendications

1. Système (300) incluant :
une plateforme de service (312) ;
un dispositif informatique (302) en communication avec la plateforme de service (312) ; et
un dispositif de distribution d'aérosol comprenant :
au moins un boîtier renfermant un réservoir (218) configuré pour retenir une composition de précurseur d'aérosol ;
un élément chauffant (222) commandable pour activer et vaporiser des composants de la composition de précurseur d'aérosol ;
un capteur de température configuré pour mesurer une température de l'élément chauffant (222), ou mesurer une propriété du capteur de température à partir de laquelle la température de l'élément chauffant (222) est déterminable ; et
une unité microcontrôleur (MCU) (208) couplée au capteur de température et incluant une interface de communication intégrée (246) configurée pour permettre la connexion à un réseau local sans fil (WLAN) (304), et la communication avec la plateforme de service (312) qui inclut une base de données sur au moins un réseau incluant le WLAN (304), la MCU (208) étant configurée pour communiquer avec la plateforme de service (312) pour permettre le stockage de la température dans la base de données et l'analyse de la température à partir de celle-ci, et pour permettre au dispositif informatique (302) en communication avec la plateforme de service (312) et à distance de la MCU (208) de recevoir et de fournir à distance un retour d'information perceptible par l'utilisateur qui indique que la température de l'élément chauffant (222) est supérieure, égale ou inférieure à une température seuil qui définit une limite supérieure acceptable, dans lequel la MCU (208) répond à des signaux reçus du, et est configurée pour être commandée à distance par le, dispositif informatique (302) pour commander au moins un élément fonctionnel du dispositif de fourniture d'aérosol, la commande de l'au moins un élément fonctionnel incluant la modification d'un état verrouillé du dispositif de fourniture d'aérosol sur la base de la température de l'élément chauffant (222).

2. Système selon la revendication 1, dans lequel le dispositif de fourniture d'aérosol comprend en outre
un capteur de mouvement (248) configuré pour détecter un mouvement du dispositif de fourniture d'aérosol, et
dans lequel la MCU (208) est également couplée au capteur de mouvement (248) et configurée pour communiquer avec la plateforme de service (312) pour permettre au dispositif informatique (302) de recevoir et de fournir à distance un retour d'information perceptible par l'utilisateur qui indique le mouvement détecté par le capteur de mouvement (248).

3. Système selon la revendication 1 ou 2,
dans lequel la MCU (208) est en outre configurée pour commander un indicateur (250) pour fournir un retour d'information perceptible par l'utilisateur qui indique la température de l'élément chauffant (222).

4. Système selon l'une quelconque des revendications 1 à 3, dans lequel le dispositif de fourniture d'aérosol comprend en outre
un capteur de mouvement (248) configuré pour détecter un mouvement du dispositif de fourniture d'aérosol, et
dans lequel la MCU (208) est également couplée au capteur de mouvement (248) et configurée pour commander un indicateur (250) pour fournir un retour d'information perceptible par l'utilisateur qui indique le mouvement détecté par le capteur de mouvement (248).

5. Système selon l'une quelconque des revendications 1 à 4, dans lequel
la composition de précurseur d'aérosol comprend de la glycérine et de la nicotine.

6. Système (300) incluant :
une plateforme de service (312) ;
un dispositif informatique (302) en communication avec la plateforme de service (312) ; et
un corps de commande couplé ou couplable à une cartouche (104) pour former un dispositif de fourniture d'aérosol, la cartouche (104) incluant un réservoir (218) configuré pour retenir une composition de précurseur d'aérosol, un élément chauffant (222) commandable pour activer et vaporiser des composants de la composition de précurseur d'aérosol, et un capteur de température configuré pour mesurer une température de l'élément chauffant (222), ou mesurer une propriété du capteur de température à partir de laquelle la température de l'élément chauffant (222) est déterminable, le corps de commande comprenant :
un boîtier ; et à l'intérieur du boîtier,
une unité microcontrôleur (MCU) (208) couplée au capteur de température lorsque le corps de commande est couplé à la cartouche (104), et incluant une interface de communication intégrée (246) configurée pour permettre la connexion à un réseau local sans fil (WLAN) (304), et la communication avec la plateforme de service (312) qui inclut une base de données sur au moins un réseau incluant le WLAN (304), la MCU (208) étant configurée pour communiquer avec la plateforme de service (312) pour permettre au dispositif informatique (302) en communication avec la plateforme de service (312), et à distance de la MCU (208), d'assurer le stockage de la température dans la base de données et l'analyse de la température à partir de celle-ci, et de recevoir et de fournir à distance un retour d'information perceptible par l'utilisateur qui indique que la température de l'élément chauffant (222) est supérieure, égale ou inférieure à une température seuil qui définit une limite supérieure acceptable, dans lequel la MCU (208) répond à des signaux reçus du, et est configurée pour être commandée à distance par le, dispositif informatique (302) pour commander au moins un élément fonctionnel du dispositif de fourniture d'aérosol, la commande de l'au moins un élément fonctionnel incluant la modification d'un état verrouillé du dispositif de fourniture d'aérosol sur la base de la température de l'élément chauffant (222).

7. Système selon la revendication 6, dans lequel le corps de commande comprend en outre un capteur de mouvement (248) configuré pour détecter le mouvement du corps de commande, et
dans lequel la MCU (208) est également couplée au capteur de mouvement (248) et configurée pour communiquer avec la plateforme de service (312) pour permettre au dispositif informatique (302) de recevoir et de fournir à distance un retour d'information perceptible par l'utilisateur qui indique le mouvement détecté par le capteur de mouvement (248).

8. Système selon la revendication 6 ou 7,
dans lequel la MCU (208) est en outre configurée pour commander un indicateur (250) pour fournir un retour d'information perceptible par l'utilisateur qui indique la température de l'élément chauffant (222).

9. Système selon l'une quelconque des revendications 6 à 8, dans lequel le corps de commande comprend en outre
un capteur de mouvement (248) configuré pour détecter un mouvement du dispositif de fourniture d'aérosol, et
dans lequel la MCU (208) est également couplée au capteur de mouvement (248) et configurée pour commander un indicateur (250) pour fournir un retour d'information perceptible par l'utilisateur qui indique le mouvement détecté par le capteur de mouvement (248).
